(19) **Europäisches Patentamt European Patent Office Office européen des brevets**

(11) **EP 4 573 136 B1**

(12) # EUROPEAN PATENT SPECIFICATION

(45) Date of publication and mention
of the grant of the patent:
**27.05.2026 Bulletin 2026/22**

(21) Application number: **22839712.1**

(22) Date of filing: **16.12.2022**

(51) International Patent Classification (IPC):
**C08F 265/06** *(2006.01)* **C08L 51/00** *(2006.01)*

(52) Cooperative Patent Classification (CPC):
(C-Sets available)
**C08L 51/003; C08F 265/06** (Cont.)

(86) International application number:
**PCT/EP2022/086314**

(87) International publication number:
**WO 2024/125803 (20.06.2024 Gazette 2024/25)**

(54) **WATERBORNE POLYMER COMPOSITION AND PREPARATION METHOD THEREOF**

NACHHALTIGE POLYMERZUSAMMENSETZUNGEN UND VERFAHREN ZU IHRER HERSTELLUNG

COMPOSITIONS POLYMÈRES DURABLES ET LEUR PROCÉDÉ DE PRÉPARATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.06.2025 Bulletin 2025/26**

(73) Proprietors:
• **Organik Kimya Sanayi Ve Tic. A.S.**
**34075 Eyüp - Istanbul (TR)**
• **Organik Kimya Netherlands BV**
**3197 KC Botlek Rotterdam (NL)**

(72) Inventors:
• **MOSCATELLI, Davide**
**34075 Eyüp - Istanbul (TR)**
• **ERGUN ERSEN, Nur Basak**
**34075 Eyüp - Istanbul (TR)**
• **ARSLAN, Fatma**
**34075 Eyüp - Istanbul (TR)**
• **KOCABIYIK, Ilker**
**34075 Eyüp - Istanbul (TR)**
• **KAYA, Gülizar**
**34075 Eyüp - Istanbul (TR)**
• **KARAGÖZ, Sevki**
**34075 Eyüp - Istanbul (TR)**
• **KONUS, Duygu**
**34075 Eyüp - Istanbul (TR)**

(74) Representative: **Plasseraud IP**
**104 Rue de Richelieu**
**CS92104**
**75080 Paris Cedex 02 (FR)**

(56) References cited:
EP-A2- 0 267 726 JP-A- 2003 321 571
JP-A- 2005 112 722 US-A- 5 403 894
US-A1- 2013 065 070 US-A1- 2014 065 435

• **ACHILIAS ET AL: "Chemical recycling of poly(methyl methacrylate) by pyrolysis. Potential use of the liquid fraction as a raw material for the reproduction of the polymer", EUROPEAN POLYMER JOURNAL, PERGAMON PRESS LTD OXFORD, GB, vol. 43, no. 6, 5 June 2007 (2007-06-05), pages 2564 - 2575, XP022105997, ISSN: 0014-3057, DOI: 10.1016/J.EURPOLYMJ.2007.02.044**
• **DIMITRIS S ACHILIAS ET AL: "Recent Advances in the Chemical Recycling of Polymers (PP, PS, LDPE, HDPE, PVC, PC, Nylon, PMMA)", MATERIAL RECYCLING - TRENDS AND PERSPECTIVES, 1 March 2012 (2012-03-01), pages 1 - 64, XP055600108, Retrieved from the Internet <URL:http://cdn.intechopen.com/pdfs/32560/InTech-Recent_advances_in_the_chemical_recycling_of_polymers_pp_ps_ldpe_hdpe_pvc_pc_nylon_pmma_.pdf> [retrieved on 20190627]**

**(Cont. next page)**

(52) Cooperative Patent Classification (CPC): (Cont.)

C-Sets
**C08F 265/06, C08F 220/1804, C08F 220/06,
C08F 222/102**

## Description

### Technical domain of the invention

The present invention relates to waterborne polymer compositions produced by a multistage emulsion polymerization with renewable and recycled monomers, said recycled monomers comprising specific chemical compounds at specific levels. The present invention also relates to a process for producing said polymer composition. The use of the waterborne polymer compositions in coating, paint, primer, ink, pressure sensitive adhesive, or varnish is also a part of the present invention.

### Background of the invention

One of the most important challenges of the 21st century is reducing the amount of residues produced by humans. Plastic and polymer production has grown faster than any other material since the 1950s. Polymers can be recycled but only a small part of plastic and polymer is effectively recycled. For some compound the recycling process is well-known and efficient at industrial scale.

Therefore, it is desirable to use recycled monomer to produce more sustainable polymers. But generally, the recycling process produce recycled monomer comprising high level of impurities, generally higher than in the corresponding virgin monomer.

The problem is that the impurities present in the recycled monomers, especially when their concentration is high, affects the technical performances of the polymer made with said recycled monomers. Higher is the impurity levels, higher is the deterioration of the performances of the resulting polymer. The reason is that the impurities are harmful to the polymerization of monomers.

To solve this problem the recycling process of polymers includes a purification step to avoid the contamination of recycled monomer with impurities and to decrease as much as possible the level of impurities contained in the recycled monomer. Different purification processes have been developed to reach this goal. But the purification process represents an additional step in the recycling process that induces cost increase and energy consumption.

It is desirable to find new solutions for example improved depolymerization process allowing the production of recycled monomers having the same purity, in other terms the same low level of impurities, as the virgin monomers.

Nevertheless, the problem of high level of impurity is still a problem for the reuse of recycled monomers because the impurities deteriorate the technical performances of the polymers.

It would therefore have been expected that the polymerization of recycled monomers comprising a high level of impurities, for example because not purified, would lead to polymers with degraded properties.

However, against all expectations, the Applicant has discovered that it was possible to use recycled monomers, preferably methyl methacrylate containing a substantial amount of specific impurities at specific levels, in combination with biobased monomers, to obtain by a multistage emulsion polymerization, polymers having substantially the same performances and properties.

### Summary of the invention

The present invention relates to a waterborne polymer composition produced by a multistage emulsion polymerization process and obtained from recycled monomer containing specific impurity at specific level, in combination with biobased monomers. The present invention also relates to a multistage emulsion polymerization process for producing a waterborne polymer composition, and to the use of said composition in coating, textile, pressure sensitive adhesive, construction, and leather applications.

### Detailed description of the invention

The present invention relates to a waterborne polymer composition produced by a multistage emulsion polymerization process, said process comprising:

   a. A first stage in which a polymeric stabilizer is obtained by polymerizing:

   -   from 1 to 30% by weight of at least one carboxyl functional monomer(s) selected from the group comprising acrylic acid, methacrylic acid, crotonic acid, maleic acid, itaconic acid, mesaconic acid, fumaric acid, methylenemalonic acid, citraconic acid or mixtures thereof, based on the total amount of monomers of the polymeric stabilizer and,

   -   from 0 to 30% by weight of at least one crosslinking functional or multi-ethylenically unsaturated monomer, based on the total amount of monomers of the polymeric stabilizer and

- from 0 to 90% by weight of at least one recycled monomer, based on the total amount of monomers of the polymeric stabilizer;

Wherein the polymeric stabilizer has a weight average molecular weight within the range of 1.000 to 120.000 Daltons, and wherein the polymeric stabilizer has a solid content between 5 to 40% by weight;
b. A second stage in which the waterborne polymer composition is obtained by polymerizing:

- from 2 to 90% by weight of the polymeric stabilizer obtained in the first stage,
- from 0.1 to 10% by weight of at least one biobased monomer, and
- from 0.1 to 95% by weight of at least one recycled monomer,

Wherein the biobased monomer has a biobased carbon content comprised between 10 and 100%, the biobased carbon content being measured according to ASTM D6866-22 Standard;

Wherein the recycled monomer comprises from 200 ppm to 30.000 ppm by weight of methyl isobutyrate.

The waterborne polymer composition is preferably an emulsion in which the polymer is present in particulates form in dispersion in an aqueous medium.

According to the invention, it is surprisingly possible to obtain polymer emulsion with recycled monomers, preferably recycled methyl methacrylate, without affecting the performances of the polymer, especially in certain technical domain such as coating. It is therefore possible to polymerize in certain conditions recycled monomers, preferably recycled methyl methacrylate, comprising a high level of specific impurities and to obtain polymers having satisfactory performances.

The present invention proposes a new way to obtain good performances polymers made with recycled monomers, preferably with recycled methyl methacrylate, with the possibility to avoid an additional step to decrease the impurity levels in said recycled monomer.

The recycled monomer

The general term "recycled monomers" as used herein and throughout the specification is intended to refer to the recovered monomers from recycling process, generally after the recycling process of a polymer.

The recycled monomer is used in stage two of the multistage emulsion polymerization process and may be also advantageously used in the first stage to produce the polymeric stabilizer.

In the present invention, the recycled monomer comprises specific impurities present in a specific amount.

The recycled monomer used in the invention comprises from 200 ppm to 30.000 ppm by weight of methyl isobutyrate, preferably from 300 ppm to 25.000ppm, more preferably from 400 ppm to 20.000 ppm, even more preferably from 500 ppm to 20.000 ppm, even more preferably from 800 ppm to 15.000 ppm.

The recycled monomer preferably also comprises from 1 ppm to 15.000 ppm by weight of comprises methylacrylate, preferably from 10 ppm to 14.000 ppm, more preferably from 100 ppm to 13.000 ppm, even more preferably from 200 ppm to 12.000 ppm, even more preferably from 500 ppm to 11.000 ppm, even more preferably from 1.000 ppm to 10.000 ppm.

The recycled monomer preferably also comprises from 100 ppm to 10.000 ppm by weight of methyl propanoate, preferably from 200 ppm to 8.000 ppm, more preferably from 500 ppm to 6.000 ppm, even more preferably from 1.000 ppm to 5.000 ppm, even more preferably from 1.500 ppm to 4.000 ppm.

The recycled monomer preferably also comprises from 1 ppm to 15.000 ppm by weight of ethyacrylate, preferably from 10 ppm to 10.000 ppm, more preferably from 100 ppm to 8.000 ppm, even more preferably from 200 ppm to 6.000 ppm, even more preferably from 500 ppm to 6.000 ppm, even more preferably from 1.000 ppm to 5.000 ppm.

The recycled monomer preferably also comprises from 1 ppm to 15.000 ppm by weight of methyl pivalate, preferably from 10 ppm to 12.000 ppm, more preferably from 100 ppm to 10.000 ppm, even more preferably from 200 ppm to 8.000 ppm, even more preferably from 500 ppm to 7.000 ppm, even more preferably from 1.000 ppm to 6.000 ppm.

The recycled monomer preferably comprises from 200 ppm to 30.000 ppm of methyl isobutyrate, and at least one compound, preferably at least two, more preferably at least three, selected from the list comprising methyacrylate, methyl propanoate, ethylacrylate and methyl pivalate, the amount of said compounds being selected from the respecify ranges described above.

The recycled monomer preferably comprises from 200 ppm to 30.000 ppm of methyl isobutyrate, and from 1 ppm to 15.000 ppm by weight of comprises methylacrylate, and/or from 100 ppm to 10.000 ppm by weight of methyl propanoate, and/or from 1 ppm to 15.000 ppm by weight of ethyacrylate, and/or from 1 ppm to 15.000 ppm by weight of methyl pivalate.

The recycled monomer more preferably comprises from 200 ppm to 30.000 ppm of methyl isobutyrate, and from 1 ppm to 15.000 ppm by weight of comprises methylacrylate, and from 100 ppm to 10.000 ppm by weight of methyl propanoate, and from 1 ppm to 15.000 ppm by weight of ethyacrylate, and from 1 ppm to 15.000 ppm by weight of methyl pivalate.

The recycled monomers may also preferably further comprises methanol, methylacetate, and/or methylethylketone, and/or benzene, and/or toluene, and/or methylbutanoate, and/or dimethylhexadiene, and/or methyl 2-methylbutyrate, and/or 2-exyl 1-hexen, and/or n-propylcyclopentane. The amount of said compounds in the recycled monomer is preferably comprised between 1 ppm and 4.000 ppm, more preferably between 5 ppm and 2.000 ppm, more preferably between 25 ppm and 1.000 ppm.

The determination of the amount of impurities in the recycled monomers is made by gas chromatography analysis. A non-limiting example of gas chromatography device that can be used for this purpose is Agilent 7890B with headspace Agilent 7697A and mass detector Agilent 5977B. The skilled man of the art knows how to determine the amount of an impurity in a sample with known gas chromatography method.

The recycled monomer is preferably methyl methacrylate or styrene. The recycled monomer is more preferably methyl methacrylate.

The recycled monomer is obtained by a recycling process, generally after the recycling process of a polymer. In the present invention, the recycled monomer is preferably obtained by a recycling process that does not comprise a purification step. In the present invention the term "purification step" means an additional process step in which the amount of impurities present in the recycled monomer is decreased compare to the amount of impurities present in the recycled monomer directly obtained from the recycling process, for example the depolymerization of polymers.

In other terms the recycled monomer used in the present invention is preferably not purified in a purification step. The recycled monomer used in the invention preferably comprises the impurities present at the end of the recycling process, and without an additional purification step.

According to an embodiment of the present invention, the recycled methyl methacrylate is obtained via chemical recycling of poly(methyl methacrylate) (PMMA). Contrary to many polymers, quantitative depolymerization of pure PMMA to the initial monomer is likely to occur.

Thermal cracking or pyrolysis process including the degradation of the polymeric material by heating under inert atmosphere is employed in chemical recycling of PMMA. Thermal decomposition of PMMA to MMA takes place at temperatures above ceiling temperature where the rate of propagation is equal to the rate of depropagation. During depolymerization, the chain backbone of the macromolecule is split by free radical mechanism. Initial molecular weight and pyrolysis temperature influence on thermal depolymerization mechanism of PMMA. While end-chain scission is favored in the temperature range of 330 to 400 °C, random chain scission and initiation are favored at temperatures above 400 °C.

The biobased monomer

For example US2013/065070A1 or US2014/065435A1 describe manufacture of aqueous dispersions comprising a high concentration of biorenewable raw materials, such as itaconate monomers and emulsions having a large proportion of monomers based on biobased resources.

In the present invention, the biobased monomer is at least partially of renewable and non-fossil sources. According to the invention, the expression "at least partly of renewable and non-fossil sources" means that the biobased monomer has a biobased carbon content preferably between 10% by weight and 100% by weight relative to the total weight of carbon of said monomer.

The biobased carbon content is measured according to ASTM D6866-22 Standard.

In the context of the invention, the ASTM D6866-22 standard is used to characterize the biobased nature of a chemical compound, and to determine the biobased carbon content of said compound. The value is expressed as a percentage by weight of biobased carbon relative to the total weight of carbon in said compound.

ASTM D6866-22 is a test method that teaches how to experimentally measure the bio-based carbon content of solids, liquids, and gaseous samples by radiocarbon analysis.

This standard mainly uses the technology of the AMS (Accelerator Mass Spectrometry). This technique is used to naturally measure the radionuclides present in a sample, in which the atoms are ionized, then accelerated to high energies, then separated, and individually counted in Faraday collectors. This high-energy separation is extremely effective at filtering out isobaric interference, so the AMS is able to accurately measure the abundance of carbon-14 by compared to carbon 12 (14C/12C) to an accuracy of $1.10^{-15}$.

This standard makes it possible to directly distinguish carbon atoms from contemporary carbon from carbon atoms of fossil origin.

The biobased monomer has preferably a biobased carbon content comprised between 20% by weight and 100% by weight relative to the total weight of carbon of said monomer, more preferably more than 30%, even more preferably more than 50%, even more preferably more than 70%, even more preferably more than 90% by weight. In a preferred mode of the invention the biobased monomer has a biobased carbon content of 100% by weight.

The biobased monomer is preferably chosen from the list comprising ethylacrylate, lauryl (meth)acrylate, iso-bornyl (meth)acrylate, tetrahydrafurfuyl (meth)acrylate, stearyl acrylate, n-octyl acrylate, n-butyl methacrylate, methyl methacrylate, vanillin methacrylate, neopentyl glycol diacrylate, trimethyloyl propane triacrylate, pentaerythritol tetraacrylate, dipentaerythritol pentaacrylate.

The biobased monomer is more preferably ethylacrylate, lauryl (meth)acrylate, or a mixture thereof.

In the second stage the waterborne polymer composition is obtained by polymerizing from 0.1 to 10% by weight of at least one biobased monomer, preferably from 1 to 5% by weight.

The polymeric stabilizer

The polymeric stabilizer is obtained in the first stage of the multistage emulsion polymerization process and used in the second step to produce the waterborne polymer composition.

The term "polymeric stabilizer (PS)" as used herein and throughout the specification refers to a type of polymeric surfactants which have generally both hydrophobic moieties and carboxylic acid functional groups. They are macromolecules used as surfactants in conventional emulsion polymerization and widely used for producing water-based latexes with improved colloidal properties. This type of an emulsion polymerization process is also referred to as supported emulsion polymerization wherein polymeric stabilizers are the support resins, according to this terminology. The support resins are used in addition to or completely replacing conventional surfactants to colloidally stabilize the growing polymer particles in the emulsion.

The polymeric stabilizer is preferably obtained by polymerizing from 10 to 90% by weight of at least one recycled monomer, more preferably from 20 to 90% by weight, even more preferably from 40 to 90% by weight, even more preferably from 60 to 90% by weight. The percentages are expressed based on the total amount of monomers in the polymeric stabilizer.

When the polymeric stabilizer is obtained from with recycled monomer, the expression "recycled polymeric stabilizer" (RPS) is used.

The polymeric stabilizer is obtained by polymerizing from 0% to 30% by weight of at least one crosslinking functional or multi-ethylenically unsaturated monomer, preferably from 0.01 to 20 % by weight, more preferably from 0.10 to 15 % by weight. The percentages are expressed based on the total amount of monomers in the polymeric stabilizer.

The crosslinking functional or multi-ethylenically unsaturated monomer is preferably chosen from the list comprising N-methylol acrylamide, N-methylolmethacrylamide, N-(alkoxymethyl)acrylamides or N-(alkoxymethyl) methacrylamides containing a C1-C6-alkyl radical, e.g. N-isobuthoxymethyl)acrylamide (IBMA), N-(isobutoxymethyl) methacrylamide (IBMMA), N-(n-butoxymethyl)acrylamide (NBMA), N-(n-butoxymethyl)methacrylamide (NBMMA), diacetone acrylamide (DIAAM); multiple ethylenically unsaturated comonomers such as ethylene glycol diacrylate, 1,3-butylene glycol di(meth)acrylate, 1,4-butylene glycol di(meth)acrylate, propylene glycol diacrylate, divinyl adipate, divinyl benzene, vinyl methacrylate, vinyl acrylate, allyl (meth)acrylate, diallyl maleate, diallyl phthalate, diallyl fumarate, methylenebisacrylamide, cyclopentadienyl acrylate or triallyl cyanurate.

The polymerization in the first stage is generally made in the presence of water. In this first stage, the polymerization is preferably made in 50 to 95% by weight of water, based on the total weight of the component used in this first stage, more preferably from 60% to 80%.

The polymeric stabilizer has a weight average molecular weight within the range of 1.000 to 120.000 Daltons, preferably within the range of 5.000 to 60.000, more preferably within the range of 10.000 to 50.000, even more preferably within the range of 10.000 to 30.000 Daltons.

The weight average molecular weights of polymeric stabilizers are determined by Gel Permeation Chromatography (GPC). It is for example determined using a device such as Viscotek GPCMax, but not limiting to this specific device and following the exemplified but not limiting method. For the measurement triple -refractive index, light scattering, and viscosity- detectors can be used. In order to dissolve the polymer samples THF as solvent can be used. Molecular weight analysis with GPC instrument are performed with 5 mg/ml solutions of the polymers in Tetrahydrofuran, under a condition of eluent: tetrahydrofuran (THF) and flow rate: 1.0 mL/min. Two single-pore columns, of which exclusion limits are 400000 Da and 4000000 Da with styrene-divinylbenzene stationary phase, can be used. Polystyrene calibration samples having defined molecular weights can be used for calibration.

The polymeric stabilizer has a solid content between 5 to 40% by weight, preferably between 10 and 30% by weight, more preferably between 25 and 30% by weight.

The solid content of the polymeric stabilizers is determined according to the method of ISO 3251:2019. In said method small aluminum trays (or bigger if necessary) are weighed and recorded as T1. The amount of the substance to be analyzed is weighed into already weighted tray and registered as T2. Same repeated for 3 times. Left the trays in oven at a specified time and temperature which is 20 min. and 150 °C. Trays are removed and cooled at room temperature and weighed, registered as T3. Solid content is calculated with the formula below and average of 3 trays is taken:

$$\text{Solid content } \% = (T3 - T1) / (T2\text{-}T1) * 100$$

In the second stage, the waterborne polymer composition is obtained by polymerizing from 2 to 90% by weight of the polymeric stabilizer, preferably from 2 to 65%, more preferably from 40 to 60% by weight.

In the first stage of the multistage emulsion polymerization, the polymerization is preferably made in the presence of a polymerization initiator, and preferably in the presence of a chain transfer agent.

The polymeric stabilizer obtained in the first stage is preferably neutralized with at least one neutralizing agent to a pH value in between the range from 7 to 11. Generally, the resulting neutralized polymeric stabilizer is transparent or semitransparent. In the present invention, the term "semitransparent" means that a solution of the polymeric stabilizer of 2.5% by weight has a value below 35% when measured with light scattering test method.

Polymer

The waterborne polymer composition is obtained in the second stage of the multistage emulsion polymerization process by polymerizing:

- from 2 to 90% by weight of the polymeric stabilizer obtained in the first stage,
- from 0.1 to 10% by weight of at least one biobased monomer, and
- from 0.1 to 95% by weight of at least one recycled monomer,

The expression "from 2 to 90% by weight of the polymeric stabilizer obtained in the first stage" means that the polymeric stabilizer is the product obtained in the first stage that has a solid content from 5 to 40% by weight.

The polymer of the waterborne polymer composition of the invention has preferably a weight average molecular weight within the range of 100.000 to 20 million Daltons, preferably within the range of 200.000 to 10 million, more preferably within the range of 500.000 to 5 million Daltons.

The weight average molecular weights of polymeric stabilizers are determined by Gel Permeation Chromatography (GPC). It is for example determined using a device such as Jasco 2000 series Gel Permeation Chromatography (GPC) coupled with differential refractive index detector and following the exemplified but not limiting method. The sample is dissolved in THF at a concentration of 5 mg/mL and filtered through 0.45 $\mu$m PTFE filter. 30 $\mu$L of the polymer solution are injected into the system. The separation is performed in THF at a constant flow rate of 1 mL/min and at 40 °C using three styrene-divinyl benzene columns (300 mm x 8 mm I.D.) in series each with particle size of 5 $\mu$m and porosity of 1000, 100000 and 1000000 Å, respectively. A guard column (30 mm x 8 mm) with particle size of 5 $\mu$m is included before the analytical columns. Calibration is performed using a series of polystyrene standards from 580 to 3'200'000 g/mol. The molar masses obtained are either an interpolation or an extrapolation from the calibration curve.

During the synthesis of the resulting polymer composition, additional monomers may be used such as ethylenically unsaturated monomers preferably selected from the list comprising alkyl acrylates or alkyl methacrylates such as linear, branched or cycloaliphatic Ci-C22-alkyl(meth)acrylates, methyl(meth)acrylate, ethyl(meth)acrylate,n-butyl(meth)acrylate, isobutyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl- (meth)acrylate and tert-butyl(meth)acrylate, aryl(meth)acrylates, benzyl(meth)acrylate and phenyl(meth)-acrylate, tetrahydrofurfuryl(meth)acrylate, methoxyethoxyethyl(meth)-acrylate, 1 - butoxypropyl(meth)acrylate,cyclohexyloxymethyl(meth)acrylate,methoxymethoxyethyl(meth )acrylate, benzyloxymethyl(meth)acrylate, furfuryl-(meth)acrylate, 2-butoxy ethyl (meth)acrylate, 2-ethoxyethyl(meth)acrylate, allyloxymethyl(meth)acrylate, 1 - ethoxybutyl(meth)acrylate, 1 -ethoxyethyl- (meth)acrylate,ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxy- butyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10 (meth)acrylamides, acid functional monomers such as acrylic acid, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

Emulsion Polymerization process

Emulsion polymerization is a type of free radical polymerization process which generally starts with an emulsion incorporating water, at least one monomer and at least one surfactant. The polymerization is generally initiated with a polymerization initiator. The resulting polymers produced in such a way are polymer particles dispersed in the water phase.

By emulsion polymerization we preferably exclude the inverse emulsion polymerization.

The polymeric stabilizer is a type of surfactant and acts as a surfactant.

During the polymerization process, the polymeric stabilizer provides sites for particle nucleation, controls the particle size, and provides colloidal stability as the particles are formed. Thus, besides solubilizing hydrophobic monomers, surfactants in conventional emulsion polymerization process have various functions such as affecting the number and size of the emulsion particles formed, providing stability, as particles continue to grow in the dispersion and during post-polymerization processing.

The present invention relates to a multistage emulsion polymerization process for producing a waterborne polymer composition, said process comprising the following successive steps:

a. Forming a first mixture comprising:

i. from 1 to 30% by weight of at least one carboxyl functional monomer(s) selected from the group comprising acrylic acid, methacrylic acid, crotonic acid, maleic acid, itaconic acid, mesaconic acid, fumaric acid, methylenemalonic acid, citraconic acid or mixtures thereof,
ii. from 0 to 30% by weight of at least one crosslinking functional or multi-ethylenically unsaturated monomer, and
iii. from 0 to 90% by weight of at least one recycled monomer;

b. Polymerizing said first mixture in the presence of at least one polymerization initiator, water, and at least one chain transfer agent, to produce a polymeric stabilizer in the form of a polymer dispersion, said polymeric stabilizer having a weight average molecular weight within the range of 1.000 to 120.000 Daltons;
c. Neutralizing the polymeric stabilizer with at least one neutralizing agent to a pH value in between the range from 7 to 11;
d. Forming a second mixture comprising:

i. From 2 to 90% by weight of the neutralized polymeric stabilizer obtained in step c,
ii. From 0.1 to 10% by weight of at least one biobased monomer, and
iii. From 0.1 to 95% by weight of at least one recycled monomer

e. Polymerizing said second mixture in the presence of at least one polymerization initiator to obtain the waterborne polymer composition;

Wherein the biobased monomer has a biobased carbon content comprised between 10 and 100%, the biobased carbon content being measured according to ASTM D6866-22 Standard;

Wherein the recycled monomer comprises from 200 ppm to 30.000 ppm by weight of methyl isobutyrate.

The flow of the polymerization initiator preferably ends 5 to 15 minutes after the beginning of the polymerization of step b and/or e.

The first mixture of step a comprises water, preferably from 50 to 95% by weight of water, based on the total weight of said first mixture, more preferably from 60% to 80%.

The recycled monomer used in the process of the invention is preferably methyl methacrylate. It preferably comprises the same impurities at the same preferred levels as described in the above paragraphs concerning the waterborne polymer composition.

The polymeric stabilizer obtained at step b has preferably a solid content from 5 to 40% by weight, preferably between 10 and 30% by weight, more preferably between 25 and 30% by weight.

Use of the waterborne polymer composition

The present invention relates to the use of the waterborne polymer composition according to the invention, or the waterborne polymer composition resulting from process of the invention, to produce coating, paint, primer, ink, varnish, pressure sensitive adhesive, and use of said waterborne polymer composition as textile polymers in finishing, in coating, in flocking, or in nonwoven, or as textile auxiliaries in pretreatment, in dyeing, in printing, or in finishing, or as leather additive in wet end or in finishing, or as additive in construction.

The present invention also relates to a coating, paint, primer, ink, pressure sensitive adhesive, or varnish made with the waterborne polymer composition according to the invention or the waterborne polymer composition resulting from process of the invention.

The minimum film forming temperature of the waterborne polymer composition is between - 50°C and +50°C, preferably between -30°C and +30°C.

The waterborne polymer composition of the invention may be advantageously used in coating formulations such as interior or exterior paints, primers, plasters, trowel applied decorative coatings for architectural applications, also for industrial wood and metal coatings, coatings for plastic & composite surfaces, road marking paints, roof coatings, roof tile paints, printings inks and overprint varnishes, pressure sensitive adhesives such as paper label adhesive, packaging tape adhesive, protective film adhesive, lamination adhesive, contact adhesive, paper tape adhesive, masking tape adhesive, film label adhesive, cold seal-heatseal adhesive, flooring, adhesive, flexible packaging adhesive, tapes, protective films, packaging lamination, specialty paper, paper coating, paper impregnation binder, release binder, paper saturation binder etc., textile and leather applications such as finishing, coating, flocking, nonwoven, printing, wet end, finishing and construction applications such as waterproofing & sealing, cement modifiers, sealants, tile adhesives and grouts, self-leveling compounds and redispersible powders.

Another object of the invention

According to another object the invention, the invention relates to a waterborne polymer composition produced by a multistage emulsion polymerization process, said process comprising:

a. A first stage in which a polymeric stabilizer is obtained by polymerizing:

- from 1 to 30% by weight of at least one carboxyl functional monomer(s) selected from the group comprising acrylic acid, methacrylic acid, crotonic acid, maleic acid, itaconic acid, mesaconic acid, fumaric acid, methylenemalonic acid, citraconic acid or mixtures thereof, based on the total amount of monomers of the polymeric stabilizer and,

- from 0 to 30% by weight of at least one crosslinking functional or multi-ethylenically unsaturated monomer, based on the total amount of monomers of the polymeric stabilizer and

- from 0 to 90% by weight of at least one recycled monomer, based on the total amount of monomers of the polymeric stabilizer;
Wherein the polymeric stabilizer has a weight average molecular weight within the range of 1.000 to 120.000 Daltons, and wherein the polymeric stabilizer has a solid content between 5 to 40% by weight;

a. A second stage in which the waterborne polymer composition is obtained by polymerizing:

- from 2 to 90% by weight of the polymeric stabilizer obtained in the first stage,

- from 0.1 to 10% by weight of at least one biobased monomer, and

- from 0.1 to 95% by weight of at least one recycled monomer,

Wherein the biobased monomer has a biobased carbon content comprised between 10 and 100%, the biobased carbon content being measured according to ASTM D6866-22 Standard;

Wherein the recycled monomer is styrene, or its dimer or its trimer, and comprises from 10 ppm to 3.000 ppm by weight of benzene.

Generally, the recycling of polystyrene leads to the production of about 60-65 % by weight of styrene, 20-25% by weight of its dimers and 10-15% by weight of its trimers.

According to this object of the invention, the recycled styrene, or its dimer, or its trimer comprises from 10 ppm to 3.000 ppm by weight of benzene, preferably from 20 ppm to 1.500ppm, more preferably from 50 ppm to 1.000 ppm, even more preferably from 100 ppm to 800 ppm, even more preferably from 200 ppm to 600 ppm.

According to this object of the invention, the recycled styrene, or its dimer, or its trimer also preferably comprises from 10 ppm to 3.000 ppm by weight of toluene, preferably from 20 ppm to 1.500ppm, more preferably from 50 ppm to 1.000 ppm, even more preferably from 100 ppm to 800 ppm, even more preferably from 200 ppm to 600 ppm.

According to this object of the invention, the recycled styrene, or its dimer, or its trimer also preferably comprises from 1 ppm to 25.000 ppm by weight of ethylbenzene, preferably from 20 ppm to 15.000ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

According to this object of the invention, the recycled styrene, or its dimer, or its trimer also preferably comprises from 1 ppm to 25.000 ppm by weight of cumene, preferably from 20 ppm to 15.000ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

According to this object of the invention, the recycled styrene, or its dimer, or its trimer also preferably comprises from 1 ppm to 25.000 ppm by weight of alpha-methyl styrene, preferably from 20 ppm to 15.000ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

According to this object of the invention, the recycled styrene, or its dimer, or its trimer also preferably comprises from 1 ppm to 5.000 ppm by weight of 1,3-diphenylpropane, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

According to this object of the invention, the recycled styrene, or its dimer, or its trimer also preferably comprises from 1 ppm to 5.000 ppm by weight of 2,4-diphenyl-1-butene, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

According to this object of the invention, the recycled styrene, or its dimer, or its trimer also preferably comprises from 1 ppm to 5.000 ppm by weight of 2,4,6-triphenyl-1-hexene, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene or its dimer or its trimer preferably comprises 10 ppm to 3.000 ppm by weight of benzene, and at least one compound, preferably at least two, more preferably at least three, more preferably at least four, more preferably at least five compounds selected from the list comprising toluene, ethylbenzene, cumene, alpha-methyl styrene, 1,3-diphenylpropane, 2,4-diphenyl-1-butene, 2,4,6-triphenyl-1-hexene, the amount of said compounds being selected from the respecify ranges described above.

The recycled styrene or its dimer or its trimer preferably comprises 10 ppm to 3.000 ppm by weight of benzene, and from 10 ppm to 3.000 ppm by weight of toluene, from 1 ppm to 25.000 ppm by weight of ethylbenzene, from 1 ppm to 25.000 ppm by weight of cumene, from 1 ppm to 25.000 ppm by weight of alpha-methyl styrene, from 1 ppm to 5.000 ppm by weight of 1,3-diphenylpropane, from 1 ppm to 5.000 ppm by weight of 2,4-diphenyl-1-butene, and from 1 ppm to 5.000 ppm by weight of 2,4,6-triphenyl-1-hexene.

The recycled styrene is generally obtained via chemical recycling of polystyrene (PS).

Thermal cracking or pyrolysis process including the degradation of the polymeric material by heating under inert atmosphere is employed in chemical recycling of PS. Thermal decomposition of PS to styrene takes place at temperatures above ceiling temperature where the rate of propagation is equal to the rate of depropagation.

Compared to PMMA polymer, Polystyrene has a higher ceiling temperature which leads to depolymerization at higher temperature. End-chain scission is favored in the temperature range of 420 to 500 °C, random chain scission and initiation are favored at temperatures above 520-560 °C. For PMMA the main product is MMA, while for polystyrene the higher temperature leads to the formation of about 65% of styrene, while also dimers and trimers are formed to the thermodynamic equilibrium.

The preferences described above, concerning biobased monomer, polymeric stabilizer, polymer, and emulsion polymerization process, apply on this object of this invention, including the preferences.

The use of the polymer obtained according to this object of the invention in the same technical domain and for the same function is also part of this object of this invention related to recycled styrene.

The present invention can be understood more readily by the Examples included in the following part of the description. It is to be understood that both the foregoing examples and the general description are exemplary and explanatory only and are not restrictive of the invention, as claimed.

**Examples**

A) Synthesis of Polymeric Stabilizer

To a 3-necked flask equipped with stirrer, thermometer and a reflux condenser, 670.7 parts of deionized water was added, and the reactor temperature was heated to 86 °C. 7.03 parts of ADEKA SR-1025 was added to the reactor. 24.6 parts of pre-emulsion taken from the total monomer emulsion was added to the reactor, wherein the total monomer emulsion consists of 166.82 parts of deionized water, 21.24 parts of ADEKA SR 1025, 319.38 parts of methyl methacrylate, 6.92 parts of n-Dodecyl mercaptane, 0.4 parts 1,3-Butanediol dimethacrylate, 37.3 parts of butyl acrylate, 27 parts of methacrylic acid.

0.53 parts of Ammonium persulfate dissolved in 25.1 parts of deionized water was added to the reactor.

After that, the remaining part of the pre-emulsion was fed at 85°C in 60 min to the reactor in parallel with 1.06 parts of ammonium persulfate dissolved in 85.4 parts of deionized water. The initiator solution finished 10 minutes after the pre-emulsion feed.

The temperature of the reaction was kept at 85°C 60 minutes more and 17 parts of 25% of ammonium hydroxide was added in 20 min at 80°C. The reaction temperature was maintained at 80°C, 120 minutes more.

One virgin methyl methacrylate (MMA) and two different recycled methyl methacrylate have been used. As the result of this polymerization process, we therefore obtain three polymeric stabilizers PS1, PS2 and PS3.

Table 1 recapitulates the methyl isobutyrate content in each MMA and the corresponding Polymeric Stabilizer made with the different MMA.

All the polymeric stabilizers have a solid content of 27.6% by weight, a pH comprised between 8.2 and 8.3, and a viscosity (LVT 2/60) is comprised between 40 cps and 60 cps.

Table 1: Amount of methyl isobutyrate in MMA, and corresponding Polymeric Stabilizers.

| Methyl methacrylate (MMA) | Methyl isobutyrate concentration in MMA in ppm | Corresponding Polymeric Stabilizer made with MMA |
|---|---|---|
| Virgin MMA | 140 ppm | PS1 |
| Recyled MMA 1 | 1280 ppm | PS2 |
| Recyled MMA 2 | 22.490 ppm | PS3 |

The percentage in weight based on the total amount of monomers of the polymeric stabilizer are the following: MMA: 83.16%; 1,3 butanediol dimethylacrylate:0.1% ; butylacrylate:9.7%, and methacrylic acid:7.04%.

B) Synthesis of Emulsion

To a 3-necked flask equipped with stirrer, thermometer, and a reflux condenser, 716.8 parts of resulting polymeric stabilizer of part A was added and the line was washed with 62 parts of deionized water.

The temperature of the reactor was increased to 60°C. The feeding of monomer emulsion was done in 30 min, which consists of 90.13 parts of methyl methacrylate, 68 parts of ethyl acrylate having a biobased carbon content of 40% measured according to ASTM D6866-22 standard, 125.5 parts of butyl acrylate. The reactor was maintained at 50°C for 30 min more. 0.55 parts of ter-butylhydroperoxide dissolved in 10.18 parts of water was fed to the reactor in 10 minutes.

After that, 0.41 parts of Bruggolite FF6 M dissolved in 12.94 parts of water was fed to the reactor in 10 minutes.

The reactor was maintained at 85°C for 30 min more. The reactor temperature was cooled down to 70°C and 0.37 parts of ter-butylhydroperoxide dissolved in 6.9 parts of water was fed to the reactor in 10 minutes. After that, 0.30 parts of Bruggolite FF6 M dissolved in 6.9 parts of water was fed to the reactor in 10 minutes.

The reactor temperature was cooled down to 50°C and 60 parts of water was added to the reactor in 15 min. The reactor cooled down to room temperature.

The same virgin MMA and the two recycled MMA from part A have been used in the emulsion polymerization described above. Six other recycled MMA have also been used having each different amount of methyl isobutyrate.

Table 2 recapitulates the methyl isobutyrate content in each MMA.

Table 2: Amount of methyl isobutyrate in MMA used in the emulsion polymerization.

| Methyl methacrylate (MMA) | Methyl isobutyrate concentration in MMA in ppm |
|---|---|
| Virgin MMA | 140 ppm |
| Recyled MMA 1 | 250 ppm |
| Recyled MMA 3 | 570 ppm |
| Recyled MMA 4 | 910 ppm |
| Recyled MMA 2 | 1280 ppm |
| Recyled MMA 5 | 5.450 ppm |

(continued)

| Methyl methacrylate (MMA) | Methyl isobutyrate concentration in MMA in ppm |
|---|---|
| Recyled MMA 6 | 12.360 ppm |
| Recyled MMA 7 | 19.860 ppm |
| Recyled MMA 8 | 22.490 ppm |

As the result of this polymerization process, we therefore obtain emulsions described in the following table 3.

Table 3: Emulsion description

| Example | Polymeric Stabilizer used | Methyl methacrylate (MMA) used in the emulsion polymerization | Methyl isobutyrate concentration in MMA used in the emulsion polymerization (in ppm) |
|---|---|---|---|
| EM1 | PS1 | Virgin | 140 ppm |
| EM2 | PS1 | Recyled MMA 1 | 250 ppm |
| EM3 | PS1 | Recyled MMA 3 | 570 ppm |
| EM4 | PS1 | Recyled MMA 4 | 910 ppm |
| EM5 | PS1 | Recyled MMA 2 | 1280 ppm |
| EM6 | PS1 | Recyled MMA 5 | 5.450 ppm |
| EM7 | PS1 | Recyled MMA 6 | 12.360 ppm |
| EM8 | PS1 | Recyled MMA 7 | 19.860 ppm |
| EM9 | PS1 | Recyled MMA 8 | 22.490 ppm |
| EM10 | PS2 | Recyled MMA 1 | 250 ppm |
| EM11 | PS2 | Recyled MMA 3 | 570 ppm |
| EM12 | PS2 | Recyled MMA 4 | 910 ppm |
| EM13 | PS2 | Recyled MMA 2 | 1280 ppm |
| EM14 | PS2 | Recyled MMA 5 | 5.450 ppm |
| EM15 | PS2 | Recyled MMA 6 | 12.360 ppm |
| EM16 | PS2 | Recyled MMA 7 | 19.860 ppm |
| EM17 | PS2 | Recyled MMA 8 | 22.490 ppm |
| EM18 | PS3 | Recyled MMA 1 | 250 ppm |
| EM19 | PS3 | Recyled MMA 3 | 570 ppm |
| EM20 | PS3 | Recyled MMA 4 | 910 ppm |
| EM21 | PS3 | Recyled MMA 2 | 1280 ppm |
| EM22 | PS3 | Recyled MMA 5 | 5.450 ppm |
| EM23 | PS3 | Recyled MMA 6 | 12.360 ppm |
| EM24 | PS3 | Recyled MMA 7 | 19.860 ppm |
| EM25 | PS3 | Recyled MMA 8 | 22.490 ppm |

The percentage by weight of the polymeric stabilizer is 71.65%. The percentage by weight of MMA is 9%. The percentage by weight of bio-based ethylacrylate is 6.8%. The percentage by weight of Buthylacrylate is 12.55%.

C) Tests Results

The Emulsions obtained in part B have been tested as coating with the following application tests.

Hardness

Hardness of the coating films were measured using Persoz or König Pendulum. 150 μm WFT (wet film thickness) applied on glass panel, and left to be dried at climatic conditions (23°C and 50% RH). Evaluation of the hardness of paints and related coatings were done in accordance with EN ISO 1522:2006. The procedure as per Persoz is, based on the measurement of the damping of a pendulum oscillating on the paint film.

Stain Resistance

Chemical resistances of the coating films were measured according to EN 12720 (Furniture - Assessment of surface resistance to cold liquids). 2*200 μm WFT applied on beech veneer panel, after 1st layer it is dried for 4 hours @50°C and sanded. Then 2nd coat is applied and dried for 7 days @23°C. Stains were applied on cured film for different time periods. After removal and cleaning of the stains from the surface, visual evaluation was made based on numerical rating, coded from 1 to 5. (5: best; 1: worst)

The 12 Stain Tests are the following: Ammonia (2 min), Ethanol (1h), Coffee (1h), Coffee (6h), Mustard (6h), red wine (6h), ethanol (16h), water (16h), water (24h), hand cream Atrix (16h), linoleic fatty acid (1h), linoleic fatty acid (5h).

The rating for Stain resistance is the following.

5: no change

4: Minor Change: No change in surface structure: change only visible from one viewing direction, only color change, gloss, discoloration

3: Moderate Change: No change in surface structure: change only visible from several viewing directions, only color change, gloss, discoloration

2: Significant Change: Change visible in all viewing directions, color change, gloss, discoloration, and/or also minor structure defects

1: Strong Change: Distinctive change in structure and/or change in gloss, color and discoloration, and/or paper adheres to surface and/or coating has peeled off

Blocking Resistance

Blocking resistance of the coating films were measured for furniture applications according to the Internal Method as explained hereinbelow: 200 μm WFT applied on PVC sheets, dried for 60 minutes @50°C; then two pieces closed face-to-face and blocked under 5 kg for 3 hours @50°C. After that, test pieces were separated from each other, and the blocking resistance was evaluated as mentioned in ASTM-D 4946 based on numerical rating code from 1 to 10. (10: best; 1: worst).

Film appearance (wet / dry look)

Wet Film with 200μm thickness, applied on multi veneer wood surface (beech, cherry, oak, white birch, walnut and mahogany). Wet film appearance was observed visually. After drying of the coating, dry film appearance was examined similarly.

Results of the Tests

First, the results of Stain resistance are the following. The 12-stain tests are rated 5 for all emulsion obtained in part B (EM1 to EM25).

These results show that the coatings made with the emulsions EM2 to EM25 made with the recycled methyl methacrylate have the same performances compared to the coating made with EM1 made with the virgin methyl methacrylate.

These results demonstrate that, despite the presence of a high level of methyl isobutyrate in the recycled methyl methacrylate, the stain resistance is not affected, even when the level of methyl isobutyrate is very high, for example more than 100 times the level of methyl isobutyrate in the virgin MMA.

The hardness of the coatings made with EM1 to EM25 are the same with a value of 90.

The blocking resistance of the coatings made with EM1 to EM25 are the same with a value of 8.

The wet film appearance of the coatings made with EM1 to EM25 are clear and satisfactory.

The dry film appearance of the coatings made with EM1to EM25 is satisfactory. Some coatings have a better wood warming (Emulsion made with recycled MMA having more than 500 ppm of methyl isobutyrate).

These results show that the hardness and the blocking resistance of the coating made with the emulsions EM2 to EM25 made with the recycled methyl methacrylate have the same performances compared to the coating made with EM1 made with the virgin methyl methacrylate.

The results show that the appearance of coating film is maintained and not degraded.

These results demonstrate that, despite the presence of a high level of methyl isobutyrate in the recycled methyl methacrylate, the hardness, the blocking resistance, and the film appearance is not affected, even when the level of methyl isobutyrate is very high, for example more than 100 times the level of methyl isobutyrate in the virgin MMA.

Additional Tests

Two other recycled methyl methacrylate have been tested, and have the following levels of impurities described in Table 4.

Table 4: Level of impurities in recycled MMA 9 and 10

| MMA | Methyl isobutyrate ppm | Methacrylate ppm | Methyl propanoate ppm | Ethylacrylate ppm | Methyl pivalate ppm |
|---|---|---|---|---|---|
| Virgin | 140 | 0 | 70 | 0 | 0 |
| Recycled MMA 9 | 20.310 | 9.020 | 3.280 | 4.850 | 6.030 |
| Recycled MMA 10 | 21.500 | 10.680 | 4.060 | 3.660 | 3.240 |

The same process as in part A and B have been made to obtain polymer emulsions that have been tested according to the same tests as in part C.

These results show that the stain resistances, the hardness, the blocking resistance and the film appearance of the coatings made with the emulsions made with the recycled methyl methacrylate 9 and 10 are identical to the coating made with the EM1 with the virgin MMA.

These results demonstrate that, despite the presence of a very high level of impurities in the recycled methyl methacrylate, the coating performances are not affected.

**Claims**

1. A waterborne polymer composition produced by a multistage emulsion polymerization process, said process comprising:

   a. A first stage in which a polymeric stabilizer is obtained by polymerizing:

   - from 1 to 30% by weight of at least one carboxyl functional monomer(s) selected from the group comprising acrylic acid, methacrylic acid, crotonic acid, maleic acid, itaconic acid, mesaconic acid, fumaric acid, methylenemalonic acid, citraconic acid or mixtures thereof, based on the total amount of monomers of the polymeric stabilizer and,
   - from 0 to 30% by weight of at least one crosslinking functional or multi-ethylenically unsaturated monomer, based on the total amount of monomers of the polymeric stabilizer and
   - from 0 to 90% by weight of at least one recycled monomer, based on the total amount of monomers of the polymeric stabilizer;
   Wherein the polymeric stabilizer has a weight average molecular weight within the range of 1.000 to 120.000 Daltons, measured as set forth in the description, and wherein the polymeric stabilizer has a solid content between 5 to 40% by weight;

   b. A second stage in which the waterborne polymer composition is obtained by polymerizing:

   - from 2 to 90% by weight of the polymeric stabilizer obtained in the first stage,
   - from 0.1 to 10% by weight of at least one biobased monomer, and
   - from 0.1 to 95% by weight of at least one recycled monomer,

Wherein the biobased monomer has a biobased carbon content comprised between 10 and 100%, the biobased carbon content being measured according to ASTM D6866-22 Standard;
Wherein the recycled monomer comprises from 200 ppm to 30.000 ppm by weight of methyl isobutyrate.

2. A waterborne polymer composition according to claim 1, wherein the polymeric stabilizer is obtained by polymerizing from 10 to 90% by weight of at least one recycled monomer based on the total amount of monomers of the polymeric stabilizer.

3. A waterborne polymer composition according to any of the previous claims, wherein the recycled monomer comprises from 1 ppm to 15.000 ppm by weight of methylacrylate.

4. A waterborne polymer composition according to any of the previous claims, wherein the recycled monomer comprises from 100 ppm to 10.000 ppm by weight of methyl propanoate.

5. A waterborne polymer composition according to any of the previous claims, wherein the recycled monomer comprises from 1 ppm to 15.000 ppm by weight of ethyacrylate.

6. A waterborne polymer composition according to any of the previous claims, wherein the recycled monomer comprises from 1 ppm to 15.000 ppm by weight of methyl pivalate.

7. A waterborne polymer composition according to any of the previous claims, wherein the recycled monomer is methyl methacrylate.

8. A waterborne polymer composition according to any of the previous claims, wherein the biobased monomer is chosen from the list comprising ethylacrylate, lauryl (meth)acrylate, iso-bornyl (meth)acrylate, tetrahydrafurfuyl (meth) acrylate, stearyl acrylate, n-octyl acrylate, n-butyl methacrylate, methyl methacrylate, vanillin methacrylate, neopentyl glycol diacrylate, trimethyloyl propane triacrylate, pentaerythritol tetraacrylate, dipentaerythritol pentaacrylate.

9. A waterborne polymer composition according to any of the previous claims, wherein the biobased monomer is ethylacrylate, lauryl (meth)acrylate, or a mixture thereof.

10. A multistage emulsion polymerization process for producing a waterborne polymer composition, said process comprising the following successive steps:

   a. Forming a first mixture comprising:

      i. from 1 to 30% by weight of at least one carboxyl functional monomer(s) selected from the group comprising acrylic acid, methacrylic acid, crotonic acid, maleic acid, itaconic acid, mesaconic acid, fumaric acid, methylenemalonic acid, citraconic acid or mixtures thereof,
      ii. from 0 to 30% by weight of at least one crosslinking functional or multi-ethylenically unsaturated monomer, and
      iii. from 0 to 90% by weight of at least one recycled monomer;

   b. Polymerizing said first mixture in the presence of at least one polymerization initiator, water, and at least one chain transfer agent, to produce a polymeric stabilizer in the form of a polymer dispersion, said polymeric stabilizer having a weight average molecular weight within the range of 1.000 to 120.000 Daltons, measured as set forth in the description;
   c. Neutralizing the polymeric stabilizer with at least one neutralizing agent to a pH value in between the range from 7 to 11;
   d. Forming a second mixture comprising:

      i. From 2 to 90% by weight of the neutralized polymeric stabilizer obtained in step c,
      ii. From 0.1 to 10% by weight of at least one biobased monomer, and
      iii. From 0.1 to 95% by weight of at least one recycled monomer

   e. Polymerizing said second mixture in the presence of at least one polymerization initiator to obtain the waterborne polymer composition;

Wherein the biobased monomer has a biobased carbon content comprised between 10 and 100%, the biobased carbon content being measured according to ASTM D6866-22 Standard;

Wherein the recycled monomer comprises from 200 ppm to 30.000 ppm by weight of methyl isobutyrate.

11. A multistage emulsion polymerization process according to claim 10, wherein the flow of the polymerization initiator ends 5 to 15 minutes after the beginning of the polymerization of step b and/or e.

12. Use of the waterborne polymer composition according to claim 1 to 9, or of the waterborne polymer composition resulting from process according to claim 10 or 11, to produce coating, paint, primer, ink, varnish, pressure sensitive adhesive, and use of said waterborne polymer composition as textile polymers in finishing, in coating, in flocking, or in nonwoven, or as textile auxiliaries in pretreatment, in dyeing, in printing, or in finishing, or as leather additive in wet end or in finishing, or as additive in construction.

13. Coating, paint, primer, ink, pressure sensitive adhesive, or varnish made with the waterborne polymer composition according to claim 1 to 9, or of the waterborne polymer composition resulting from process according to claim 10 or 11.

**Patentansprüche**

1. Wasserbasierte Polymerzusammensetzung, hergestellt durch ein mehrstufiges Emulsionspolymerisationsverfahren, wobei das Verfahren umfasst:

   a. eine erste Stufe, in der ein polymerer Stabilisator erhalten wird durch Polymerisieren von:

      i. 1 bis 30 Gew.-% mindestens eines carboxylfunktionellen Monomers, ausgewählt aus der Gruppe bestehend aus Acrylsäure, Methacrylsäure, Crotonsäure, Maleinsäure, Itaconsäure, Mesaconsäure, Fumarsäure, Methylenmalonsäure, Citraconsäure oder Mischungen davon, bezogen auf die Gesamtmenge der Monomere des polymeren Stabilisators,
      ii. 0 bis 30 Gew.-% mindestens eines vernetzungsfähigen oder mehrfach ethylenisch ungesättigten Monomers, bezogen auf die Gesamtmenge der Monomere des polymeren Stabilisators, und
      iii. 0 bis 90 Gew.-% mindestens eines recycelten Monomers, bezogen auf die Gesamtmenge der Monomere des polymeren Stabilisators;
      wobei der polymere Stabilisator ein gewichtsmittleres Molekulargewicht im Bereich von 1.000 bis 120.000 Dalton aufweist, gemessen wie in der Beschreibung dargelegt, und wobei der polymere Stabilisator einen Feststoffgehalt von 5-40 Gew.-% aufweist;

   b. eine zweite Stufe, in der die wasserbasierte Polymerzusammensetzung erhalten wird durch Polymerisieren von:

      - 2 bis 90 Gew.-% des in der ersten Stufe erhaltenen polymeren Stabilisators,
      - 0,1 bis 10 Gew.-% mindestens eines biobasierten Monomers und
      - 0,1 bis 95 Gew.-% mindestens eines recycelten Monomers,

         wobei das biobasierte Monomer einen biobasierten Kohlenstoffgehalt zwischen 10 und 100 % aufweist, wobei der biobasierte Kohlenstoffgehalt gemäß der Norm ASTM D6866-22 gemessen wird; wobei das recycelte Monomer 200 ppm bis 30.000 ppm Gew.-% Methylisobutyrat umfasst.

2. Wasserbasierte Polymerzusammensetzung nach Anspruch 1, wobei der polymere Stabilisator durch Polymerisation von 10 bis 90 Gew.-% mindestens eines recycelten Monomers, bezogen auf die Gesamtmenge der Monomere des polymeren Stabilisators, erhalten wird.

3. Wasserbasierte Polymerzusammensetzung nach einem der vorhergehenden Ansprüche, wobei das recycelte Monomer 1 ppm bis 15.000 ppm Gew.-% Methylacrylat umfasst.

4. Wasserbasierte Polymerzusammensetzung nach einem der vorhergehenden Ansprüche, wobei das recycelte Monomer 100 ppm bis 10.000 ppm Gew.-% Methylpropanoat umfasst.

5. Wasserbasierte Polymerzusammensetzung nach einem der vorhergehenden Ansprüche, wobei das recycelte Monomer 1 ppm bis 15.000 ppm Gew.-% Ethylacrylat umfasst.

6. Wasserbasierte Polymerzusammensetzung nach einem der vorhergehenden Ansprüche, wobei das recycelte Monomer 1 ppm bis 15.000 ppm Gew.-% Methylpivalat umfasst.

7. Wasserbasierte Polymerzusammensetzung nach einem der vorhergehenden Ansprüche, wobei das recycelte Monomer Methylmethacrylat ist.

8. Wasserbasierte Polymerzusammensetzung nach einem der vorhergehenden Ansprüche, wobei das biobasierte Monomer aus der Liste ausgewählt ist, die Ethylacrylat, Lauryl(meth)acrylat, Isobornyl(meth)acrylat, Tetrahydrafurfuryl(meth)acrylat, Stearylacrylat, n-Octylacrylat, n-Butylmethacrylat, Methylmethacrylat, Vanillinmethacrylat, Neopentylglykoldiacrylat, Trimethyloylpropantriacrylat, Pentaerythritoltetraacrylat und Dipentaerythritolpentaacrylat umfasst.

9. Wasserbasierte Polymerzusammensetzung nach einem der vorhergehenden Ansprüche, wobei das biobasierte Monomer Ethylacrylat, Lauryl(meth)acrylat oder eine Mischung davon ist.

10. Mehrstufiges Emulsionspolymerisationsverfahren zur Herstellung einer wasserbasierten Polymerzusammensetzung, wobei das Verfahren die folgenden aufeinanderfolgenden Schritte umfasst:

    a. Bilden einer ersten Mischung, umfassend:

    i. 1 bis 30 Gew.-% mindestens eines carboxylfunktionellen Monomers, ausgewählt aus der Gruppe bestehend aus Acrylsäure, Methacrylsäure, Crotonsäure, Maleinsäure, Itaconsäure, Mesaconsäure, Fumarsäure, Methylenmalonsäure, Citraconsäure oder Mischungen davon,
    ii. 0 bis 30 Gew.-% mindestens eines vernetzungsfähigen oder mehrfach ethylenisch ungesättigten Monomers und
    iii. 0 bis 90 Gew.-% mindestens eines recycelten Monomers;

    b. Polymerisieren der ersten Mischung in Gegenwart von mindestens einem Polymerisationsinitiator, Wasser und mindestens einem Kettenübertragungsmittel, um einen polymeren Stabilisator in Form einer Polymerdispersion herzustellen, wobei der polymere Stabilisator ein gewichtsmittleres Molekulargewicht im Bereich von 1.000 bis 120.000 Dalton aufweist, gemessen wie in der Beschreibung dargelegt;
    c. Neutralisieren des polymeren Stabilisators mit mindestens einem Neutralisationsmittel auf einen pH-Wert im Bereich von 7 bis 11;
    d. Bilden einer zweiten Mischung, umfassend:

    i. 2 bis 90 Gew.-% des in Schritt c erhaltenen neutralisierten polymeren Stabilisators,
    ii. 0,1 bis 10 Gew.-% mindestens eines biobasierten Monomers und
    iii. 0,1 bis 95 Gew.-% mindestens eines recycelten Monomers

    e. Polymerisieren der zweiten Mischung in Gegenwart mindestens eines Polymerisationsinitiators, um die wasserbasierte Polymerzusammensetzung zu erhalten;

    wobei das biobasierte Monomer einen biobasierten Kohlenstoffgehalt zwischen 10 und 100 % aufweist, wobei der biobasierte Kohlenstoffgehalt gemäß der Norm ASTM D6866-22 gemessen wird;
    wobei das recycelte Monomer 200 ppm bis 30.000 ppm Gew.-% Methylisobutyrat umfasst.

11. Mehrstufiges Emulsionspolymerisationsverfahren nach Anspruch 10, wobei der Zufluss des Polymerisationsinitiators 5 bis 15 Minuten nach Beginn der Polymerisation von Schritt b und/oder e endet.

12. Verwendung der wasserbasierten Polymerzusammensetzung nach Anspruch 1 bis 9 oder der wasserbasierten Polymerzusammensetzung, die aus dem Verfahren nach Anspruch 10 oder 11 resultiert, zur Herstellung von Beschichtungen, Farben, Grundierungen, Tinte, Lack, druckempfindlichem Klebstoff, sowie Verwendung der wasserbasierten Polymerzusammensetzung als Textilpolymere bei der Veredelung, bei der Beschichtung, beim Beflocken oder in Vliesstoffen, oder als Textilhilfsmittel bei der Vorbehandlung, beim Färben, beim Bedrucken oder bei der Veredelung, oder als Lederadditiv im Nassbereich oder bei der Veredelung, oder als Additiv im Bauwesen.

**13.** Beschichtung, Farbe, Grundierung, Tinte, druckempfindlicher Klebstoff oder Lack, hergestellt mit der wasserbasierten Polymerzusammensetzung nach Anspruch 1 bis 9 oder mit der wasserbasierten Polymerzusammensetzung, die aus dem Verfahren nach Anspruch 10 oder 11 resultiert.

## Revendications

**1.** Composition polymère en phase aqueuse produite par un procédé de polymérisation par émulsion en plusieurs étapes, ledit procédé comprenant :

a. une première étape lors de laquelle un stabilisant polymère est obtenu par la polymérisation :

- de 1 à 30 % en poids d'au moins un monomère fonctionnel carboxylique sélectionné parmi le groupe comprenant l'acide acrylique, l'acide méthacrylique, l'acide crotonique, l'acide maléique, l'acide itaconique, l'acide mésaconique, l'acide fumarique, l'acide méthylènemalonique, l'acide citraconique ou des mélanges de ceux-ci, sur la base de la quantité totale de monomères du stabilisant polymère et,
- de 0 à 30 % en poids d'au moins un monomère de réticulation fonctionnel ou multi-éthyléniquement insaturé, sur la base de la quantité totale de monomères du stabilisant polymère et
- de 0 à 90 % en poids d'au moins un monomère recyclé, sur la base de la quantité totale de monomères du stabilisant polymère ;
dans laquelle le stabilisant polymère possède un poids moléculaire moyen en poids au sein de la gamme de 1 000 à 120 000 Daltons, mesuré comme énoncé dans la description, et dans laquelle le stabilisant polymère possède une teneur en solides comprise entre 5 et 40 % en poids ;

b. une deuxième étape lors de laquelle la composition polymère en phase aqueuse est obtenue par la polymérisation :

- de 2 à 90 % en poids du stabilisant polymère obtenu à la première étape,
- de 0,1 à 10 % en poids d'au moins un monomère biosourcé, et
- de 0,1 à 95 % en poids d'au moins un monomère recyclé,

dans laquelle le monomère biosourcé possède une teneur en carbone biosourcé comprise entre 10 et 100 %, la teneur en carbone biosourcé étant mesurée selon la norme ASTM D6866-22 ;
dans laquelle le monomère recyclé comprend de 200 ppm à 30 000 ppm en poids d'isobutyrate de méthyle.

**2.** Composition polymère en phase aqueuse selon la revendication 1, dans laquelle le stabilisant polymère est obtenu par la polymérisation de 10 à 90 % en poids d'au moins un monomère recyclé sur la base de la quantité totale de monomères du stabilisant polymère.

**3.** Composition polymère en phase aqueuse selon l'une quelconque des revendications précédentes, dans laquelle le monomère recyclé comprend de 1 ppm à 15 000 ppm en poids de méthylacrylate.

**4.** Composition polymère en phase aqueuse selon l'une quelconque des revendications précédentes, dans laquelle le monomère recyclé comprend de 100 ppm à 10 000 ppm en poids de propanoate de méthyle.

**5.** Composition polymère en phase aqueuse selon l'une quelconque des revendications précédentes, dans laquelle le monomère recyclé comprend de 1 ppm à 15 000 ppm en poids d'éthylacrylate.

**6.** Composition polymère en phase aqueuse selon l'une quelconque des revendications précédentes, dans laquelle le monomère recyclé comprend de 1 ppm à 15 000 ppm en poids de pivalate de méthyle.

**7.** Composition polymère en phase aqueuse selon l'une quelconque des revendications précédentes, dans laquelle le monomère recyclé est le méthacrylate de méthyle.

**8.** Composition polymère en phase aqueuse selon l'une quelconque des revendications précédentes, dans laquelle le monomère biosourcé est choisi dans la liste comprenant l'éthylacrylate, le (méth)acrylate de lauryle, le (méth)acrylate d'isobornyle, le (méth)acrylate de tétrahydrafurfuyle, l'acrylate de stéaryle, l'acrylate de n-octyle, le méthacrylate de n-butyle, le méthacrylate de méthyle, le méthacrylate de vanilline, le diacrylate de néopentyl glycol, le triacrylate de triméthyloyl propane, le tétraacrylate de pentaérythritol, le pentaacrylate de dipentaérythritol.

9. Composition polymère en phase aqueuse selon l'une quelconque des revendications précédentes, dans laquelle le monomère biosourcé est l'éthylacrylate, le (méth)acrylate de lauryle, ou un mélange de ceux-ci.

10. Procédé de polymérisation par émulsion en plusieurs étapes pour la production d'une composition polymère en phase aqueuse, ledit procédé comprenant les étapes successives suivantes :

    a. la formation d'un premier mélange comprenant :

    i. de 1 à 30 % en poids d'au moins un monomère fonctionnel carboxylique sélectionné parmi le groupe comprenant l'acide acrylique, l'acide méthacrylique, l'acide crotonique, l'acide maléique, l'acide itaconique, l'acide mésaconique, l'acide fumarique, l'acide méthylènemalonique, l'acide citraconique ou des mélanges de ceux-ci,
    ii. de 0 à 30 % en poids d'au moins un monomère de réticulation fonctionnel ou multi-éthyléniquement insaturé, et
    iii. de 0 à 90 % en poids d'au moins un monomère recyclé ;

    b. la polymérisation dudit premier mélange en présence d'au moins un initiateur de polymérisation, d'eau et d'au moins un agent de transfert de chaîne, pour produire un stabilisant polymère sous la forme d'une dispersion polymère, ledit stabilisant polymère ayant un poids moléculaire moyen en poids au sein de la gamme de 1 000 à 120 000 Daltons, mesuré comme énoncé dans la description ;
    c. la neutralisation du stabilisant polymère avec au moins un agent de neutralisation à une valeur de pH au sein de la gamme de 7 à 11 ;
    d. la formation d'un deuxième mélange comprenant :

    i. de 2 à 90 % en poids du stabilisant polymère neutralisé obtenu à l'étape c,
    ii. de 0,1 à 10 % en poids d'au moins un monomère biosourcé, et
    iii. de 0,1 à 95 % en poids d'au moins un monomère recyclé

    e. la polymérisation dudit deuxième mélange en présence d'au moins un initiateur de polymérisation pour obtenir la composition polymère en phase aqueuse ;

    dans lequel le monomère biosourcé possède une teneur en carbone biosourcé comprise entre 10 et 100 %, la teneur en carbone biosourcé étant mesurée selon la norme ASTM D6866-22 ;
    dans lequel le monomère recyclé comprend de 200 ppm à 30 000 ppm en poids d'isobutyrate de méthyle.

11. Procédé de polymérisation par émulsion en plusieurs étapes selon la revendication 10, dans lequel l'écoulement de l'initiateur de polymérisation se termine 5 à 15 minutes après le début de la polymérisation de l'étape b et/ou e.

12. Utilisation de la composition polymère en phase aqueuse selon la revendication 1 à 9, ou de la composition polymère en phase aqueuse résultant du procédé selon la revendication 10 ou 11, pour produire un revêtement, une peinture, un apprêt, une encre, un vernis, un adhésif sensible à la pression, et utilisation de ladite composition polymère en phase aqueuse en tant que polymères textiles en finition, en revêtement, en flocage ou en non-tissé, ou comme auxiliaires textiles en prétraitement, en teinture, en impression ou en finition, ou comme additif pour le cuir au mouillage ou en finition, ou comme additif dans la construction.

13. Revêtement, peinture, apprêt, encre, adhésif sensible à la pression ou vernis fabriqué avec la composition polymère en phase aqueuse selon la revendication 1 à 9, ou de la composition polymère en phase aqueuse résultant du procédé selon la revendication 10 ou 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013065070 A1

- US 2014065435 A1